# EUROPEAN PATENT APPLICATION

(11) **EP 1 162 570 A2**
(43) Date of publication of application: **12.12.2001**
(21) Application number: 01302670.3
(22) Date of filing: 22.03.2001
(51) Int. Cl.: G06K 19/077, G06K 7/00

(54) **Trading card, recording and/or reproducing apparatus, and communication realizing method**

(30) Priority: 09.06.2000 KR 2000031837
(71) Applicant: SAMSUNG ELECTRONICS CO., LTD., Suwon-City, Kyungki-do (KR)
(72) Inventor: Lee, Kang-hun, Seoul (KR); Hong, Wan-sun, Seoul (KR); Ko, Kyung-woo, Incheon, Metropolitan City (KR)
(74) Representative: Chugg, David John

(57) **Abstract**

A trading card (300) capable of storing hero-related data, a recording and/or reproducing apparatus (200) for reproducing subject-related data stored in the trading card (300), or recording subject-related data in a trading card, and a method which enables mutually exchanging communication between the hero of a trading card and its user are provided. The trading card (300) in which information on the subject of the trading card is printed on the sides of the trading card, data can be stored, and a recording and/or reproducing apparatus (200) can record data and/or read data in the trading card (300), the trading card has a data storage means (30) for storing subject-related data, from which the reproducing apparatus (200) can read subject-related data or to which it may record subject-related data through communications between the data storage means (30) and the recording and/or reproducing apparatus (200), and the subject-related data includes picture information characterizing or related to the subject. The trading card (100) also comprises a housing means (32) for containing and protecting the data storage means (30).

## Description

The present invention relates to a trading card and a recording and/or reproducing apparatus and communication realizing method.

Trading cards such as a sports card, a music card, and a cartoon card, are decorated with pictures showing characteristics of sports stars, musicians, cartoon characters, statistical information, and graphic symbols.

Since trading cards express sports stars, musicians, and heroes such as cartoon characters, trading cards are popular. Also, since these trading cards are issued in a limited number a year, the trading cards becomes the object of collection.

On most trading cards, still pictures (photos) are printed, but on some trading cards, 3D pictures (which may include some movement) are expressed using a hologram. However, these latter types of picture have types of short lifetime, and depend on the lighting state.

Still pictures (photos) recorded on the existing trading cards do not have systematic mutual relations. Therefore, even though a plurality of the existing trading cards having still pictures are arranged, an image of mutual relationship cannot be given.

The existing trading card delivers information unilaterally. That is, the owner of a trading card passively receives information recorded in a trading card, and communication between the user and the hero of the trading card cannot be expected. For example, if the hero of a trading card calls with his own voice user's name for greeting, the popularity of the trading card will be greatly raised.

With a view to solve or reduce the above problems, it is an aim of embodiments of the present invention to provide a trading card which can store moving picture information.

It is another aim to provide a recording and/or reproducing apparatus appropriate for the trading card.

It is still another object to provide a method which enables mutually exchanging communication between the hero of a trading card and the user of the trading card.

According to a first aspect of the invention, there is provided a trading card wherein information on the subject of the trading card is printed on the sides of the trading card, data can be stored, and a recording and/or reproducing apparatus can record data and/or read data in the trading card, the trading card having a data storage means for storing subject-related data, wherein the reproducing apparatus is arranged to read the subject-related data from the data storage means or record the subject-related data to the data storage means through communication between the data storage means and the recording and/or reproducing apparatus, and the subject-related data includes picture information characterizing or related to the subject; and a housing means for containing and protecting the data storage means.

The data storage means may be a connectionless-type semiconductor integrated circuit (IC) having a transmission and reception unit for interfacing the recording and/or reproducing apparatus for the subject-related data and operational power.

The data storage means may be a connection-type semiconductor IC having a connection terminal for interfacing the recording and/or reproducing apparatus for the subject-related data and operational power.

The data storage means may comprise: a semiconductor memory for storing the subject-related data; and an output controller for controlling reading the subject-related data from the semiconductor memory.

The data storage means may comprise: an input controller for recording the subject-related data in the semiconductor memory.

The subject-related data preferably has moving picture and still picture information related to the subject or reminding a user of the subject.

The subject-related data preferably further includes sound information related to the subject or reminding a user of the subject.

The subject-related data preferably further includes text information related to the subject, such as statistical information and personal information.

The trading card may include a coating film containing the housing means.

An identification means may be provided for identifying the trading card is further included, and the housing means supports the identification means.

Preferably, the identification means comprises a serial number, and trading cards having continuing serial numbers have continuing moving picture information.

According to a second aspect of the invention, there is provided a recording and/or reproducing apparatus capable of storing data related to a subject (subject-related data), wherein subject-related data includes picture information at least characterizing the subject or reminding a user of the subject, and the recording and/or reproducing apparatus reads the subject-related data from or records the subject-related data in a trading card, the recording and/or reproducing apparatus comprising: a transmission and reception means for transmitting data to and receiving data from the trading card; a memory for storing the subject-related data provided through the transmission and reception means; a key controller for inputting user's manipulation commands; a decoder for decoding the picture information from the subject-related data stored in the memory and then generating a video signal corresponding to the picture information; a display unit for displaying the video signal generated by the decoder; and a controller for controlling the transmission and reception unit, the decoder, and the display unit according to the manipulation commands provided through the manipulation unit.

Preferably, the transmission and reception means comprises a connection unit for allowing an electrical contact with the trading card.

Preferably, the transmission and reception means transmits an optical or radio signal to and receives an optical or radio signal from the trading card.

The recording and/or reproducing apparatus may further comprise: an output terminal for outputting video and voice signals reproduced by the decoder.

The recording and/or reproducing apparatus may further comprise: a speaker for outputting a voice signal output through the controller.

The recording and/or reproducing apparatus may further comprise: an earphone connection jack for outputting the voice signal output through the controller, to an earphone for outputting.

The recording and/or reproducing apparatus may further comprise: an interface unit for outputting the subject-related data stored in the memory to an external device, or receiving the subject-related data provided from the external device.

Preferably, the controller transmits the subject-related data stored in the memory to the trading card, in response to a recording command applied from the key controller.

According to a third aspect, there is provided a method for realizing communications between the hero of a trading card and a user, using the trading card capable of storing data related to a subject (subject-related data), wherein the subject-related data has moving picture information characterizing the subject or reminding the user of the subject, the method comprising the steps of: (a) receiving user-related information from the user of the trading card; (b) building the content of a conversation between the hero of the trading card and the user using user-related information; (c) storing the contents of the conversation in the trading card; and (d) outputting the built conversation when the subject-related information in the trading card is reproduced.

Preferably, in the step (d), the contents of the build conversation is displayed in the form of text information.

Preferably, the step (d) further comprising the sub-steps of: (d1) reading a sound signal indicating the voice of the hero from the subject-related data; (d2) extracting parameters for synthesizing a voice, from the hero's sound signal; (d3) synthesizing a voice for the built conversation, using the parameters extracted in the step (d2); and (d4) outputting the voice synthesized signal through a speaker.

For a better understanding of the invention, and to show how embodiments of the same may be carried into effect, reference will now be made, by way of example, to the accompanying diagrammatic drawings in which:
Figure 1 illustrates a trading card and the operation of a recording and/or reproducing apparatus therefor according to an embodiment of the present invention;
Figure 2 illustrates the external appearance of a trading card of an embodiment of according to the present invention;
Figures 3A and 3B illustrate an embodiment of the trading card according to the present invention;
Figure 4 illustrates another embodiment of the trading card according to the present invention;
Figures 5A and 5B illustrates the external appearance of an embodiment of the recording and/or reproducing apparatus according to the present invention;
Figure 6 is a block diagram for showing the structure of an embodiment of the recording and/or reproducing apparatus according to the present invention;
Figure 7 is a block diagram for showing the structure of another embodiment of the recording and/or reproducing apparatus according to the present invention;
Figure 8 is a flowchart showing the process in which the recording and/or reproducing apparatuses shown in Figures 6 and 7 operate when connected to a computer;
Figure 9 illustrates the process in which subject-related data is recorded in a trading card 100;
Figure 10 illustrates the external appearance of the recording apparatus 800 shown in Figure 9;
Figure 11 illustrates the process in which subject-related data is recorded in a trading card 100;
Figure 12 illustrates another embodiment of the trading card according to the present invention;
Figure 13 illustrates the process in which the trading cards shown in Figure 12 are reproduced;
Figures 14A and 14B illustrate an example of data recorded in a trading card 100;
Figure 15 illustrates the relation between a recording and/or reproducing apparatus 200 and other devices; and
Figure 16 is a flowchart showing a communication realizing method according to the present invention.

Hereinafter, embodiments of the present invention will be described in detail with reference to the attached drawings. The present invention is not restricted to the following embodiments, and many variations are possible within the scope of the present invention. The embodiments of the present invention are provided in order to more completely explain the present invention to anyone skilled in the art.

A trading card having an embedded storage means according to the present invention has the size, external appearance, and format similar to those of a paper trading card which is currently circulated, in appearance and material, and therefore the impression of the existing trading card is maintained without any change. At the same time, a user can watch, listen, and enjoy image, sound, and text information stored in the data storage medium inside the trading card of the present invention, through a display apparatus or a reproducing apparatus of the present invention.

Also, compared to a connection-type trading card which communicates subject-related data through an electrical signal, a connectionless-type trading card which communicates subject-related data through an optical or radio signal enables reduction in thickness and weight of a reproducing apparatus and one card to be reproduced in a plurality of reproducing apparatuses.

Also, if user's related information or desired messages are input in a data storage means which stores image, sound and text information, through a reproducing apparatus, a user can communicate (greetings, introduction of contents, etc.) with the hero (a sports start, film star, cartoon hero, etc.) stored in the data storage means, with the voice of the hero.

Also, a user can input desired sound information in the pre-programmed data storage means through software or other input apparatuses so that the sound can be heard while watching image and/or text information.

Also, user's related information or desired messages can be input in the trading card of the present invention through a recording apparatus, software, or other input apparatuses.

Also, the reproducing apparatus of the present invention can output reproduced moving pictures in a TV receiver, personal computer, digital versatile disc (DVD), head mount device (HMD), camcorder, monitor, etc.

Also, if moving pictures stored in a plurality of trading cards are reproduced continuously, a function for a movie formed of only moving pictures that are wanted by a user can be implemented, and the user need not change each trading card, which saves time.

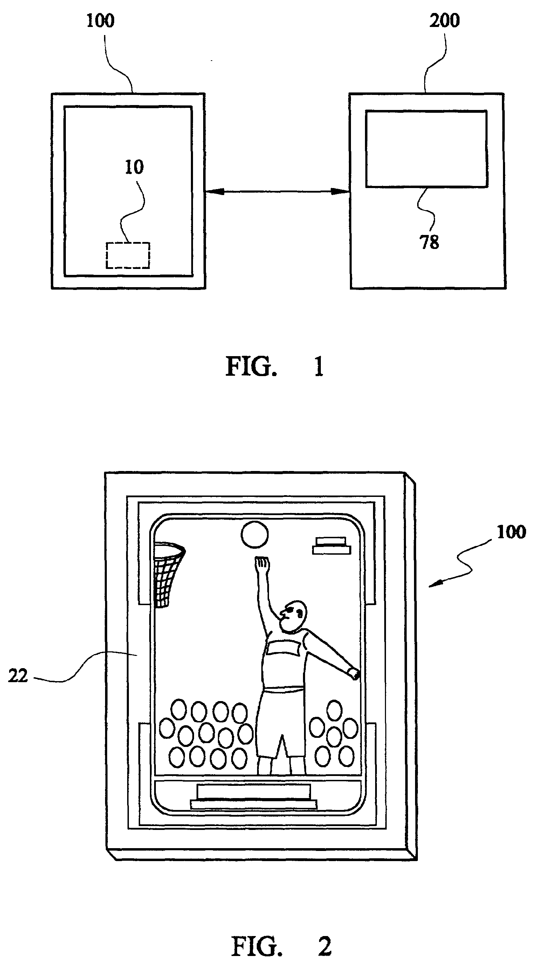

Figure 1 illustrates a trading card and the operation of a recording and/or reproducing apparatus therefor according to the present invention.

A trading card 100 according to the present invention has photos, statistical information, or personal information printed on its sides as the existing trading cards. In addition the trading card 100 has a capability of storing data related to a hero (hereinafter referred to as "subject-related data").

The subject-related data includes moving pictures, still pictures, sound, and text information. Text information includes statistical information of a hero, personal information, etc. In addition to subject-related data, user-related information can be recorded in the trading card 100,

The subject-related data is stored in a data storage unit 10 contained in the inside of the trading card 100. To prevent illegal copying, a copy protection scheme in hardware and software is applied to the subject-related data.

The data storage unit 10 can be a semiconductor integrated circuit (IC), compact disc, video tape, etc. The semiconductor IC has a semiconductor memory and an input/output (I/O) controller. Still picture, sound, and text information require a lower storage capacity than moving picture information. Moving picture and still picture information can be recorded after being compressed.

The trading card 100 communicates with a recording and/or reproducing apparatus 200. Communication may be through an electrical signal, an optical signal or a radio signal.

The recording and/or reproducing apparatus 200 reads subject-related data stored in the trading card 100. The read subject-related data is processed according to manipulation commands from the user, and the processed result is displayed through a display unit 52, or provided to other display apparatus (not shown). The recording and/or reproducing apparatus 200 can record subject-related data provided from other sources such as a computer in the trading card 100.

Figure 2 illustrates the external appearance of a trading card according to the present invention. Figure 2 shows the front side of the trading card, on which a fulllength photo 22 of a sports star is printed. A connection terminal (not shown) for exchanging an electrical signal with the recording and/or reproducing apparatus 200 can be installed in the back side.

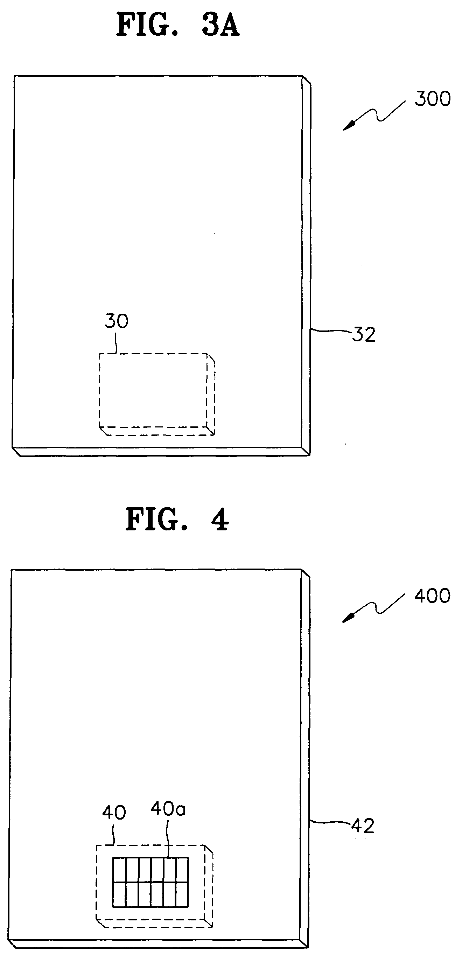

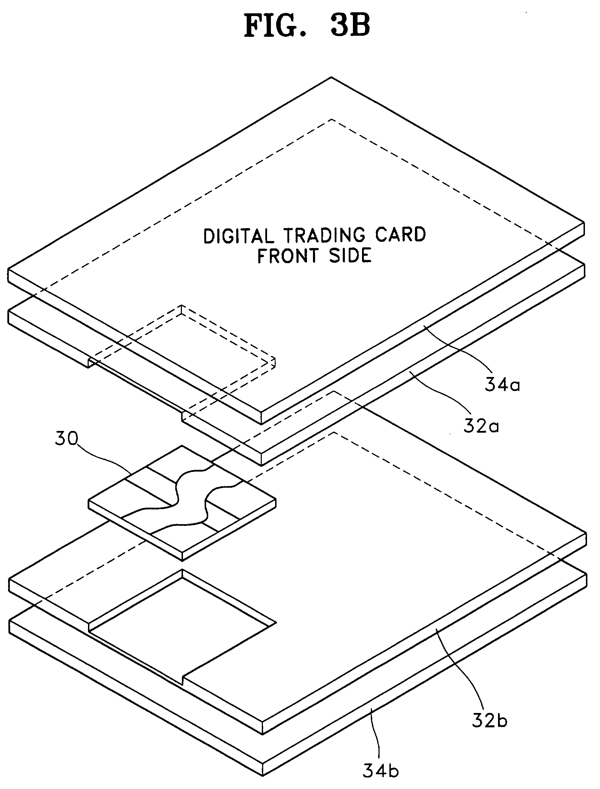

Figures 3A and 3B illustrate the structure of a preferable embodiment of the trading card according to the present invention. The trading card 300 shown in Figure 3A has a connectionless-type semiconductor IC 30 which does not need a connection terminal. The connectionless-type semiconductor IC 30 converts an electromotive force induced by a radio signal applied by the recording and/or reproducing apparatus 200, into its power source.

Referring to Figure 3A, a part indicated by dotted lines shows what a housing 32 contains. The trading card 300 of Figure 3A has the semiconductor IC 30 and the housing 32. The semiconductor IC 30 is contained inside the housing 32 and the housing 32 protects the semiconductor IC 30.

The semiconductor IC 30 generally has a semiconductor memory, an input controller, an output controller, etc. The input controller controls recording subject-related data and user-related data in the semiconductor memory, while the output controller controls outputting subject-related data and user-related data stored in the semiconductor memory to the recording and/or reproducing apparatus 200.

The semiconductor IC 30 transmits subject-related data, which is stored in the form of an optical or radio signal, to the recording and/or reproducing apparatus 200 of Figure 1, or receives subject-related data provided from the recording and/or reproducing apparatus 200. The semiconductor IC 30 transmits subject-related data in the form of an optical or radio signal so that one trading card 300 can be reproduced simultaneously in a plurality of recording and/or reproducing apparatuses.

Generally, as shown in Figure 2, the photo of a sports star is printed on the front side of the housing 32, while other personal information and statistical information are printed on its back side.

The material for the housing 32 can be anything such as paper or plastics. If the material for the housing 32 is paper, a coating film is applied to strengthen the protection of the housing 32. A part containing the semiconductor IC 30 can be processed so that the part can have a higher intensity (rigidity) than other parts. By using paper material for the housing 32, the trading card 300 can give an impression similar to the existing cards.

Figure 3B is a sectional view of the trading card shown in Figure 3A. As shown in Figure 3B, the housing 32 of the trading card is to protect the semiconductor IC 30 and is formed of an upper layer 32A and a bottom layer 32B. Each of the upper layer 32A and the bottom layer 32B has an indentation for reception of the card. The material for the housing 32 is paper or plastics.

Protection films 34A and 34B for protecting the housing 32 cover the upper side and bottom side of the housing 32. The material for the protection films 34A and 34B is a laminate film.

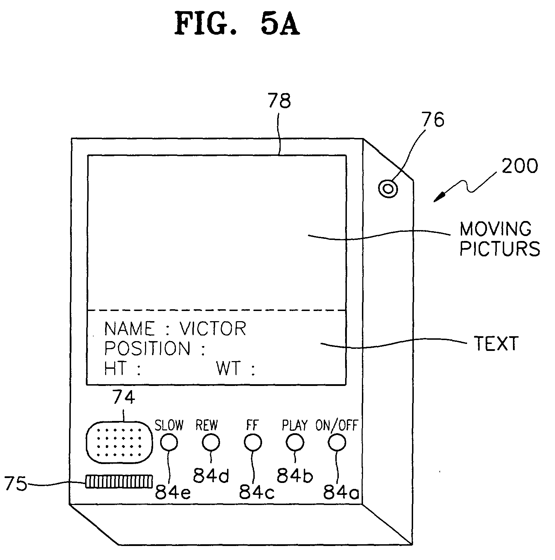

Figure 4 illustrates another embodiment of the trading card according to the present invention. The trading card 400 of Figure 4 has a connection-type semiconductor IC 40.

The semiconductor IC 40 has a connection terminal 40A. The connection terminal 40A is provided for an electrical contact with the recording and/or reproducing apparatus 200 shown in Figure 1. The power for the operation of the semiconductor IC 40 is provided through the connection terminal 40A.

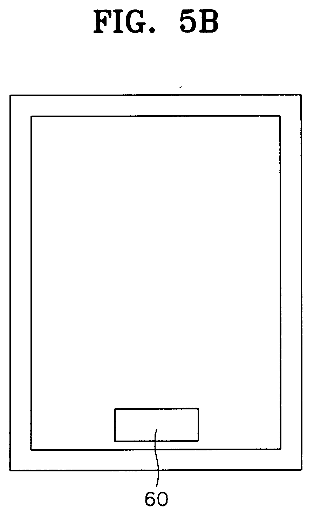

Figures 5A and 5B illustrates the external appearance of an embodiment of the recording and/or reproducing apparatus according to the present invention. The apparatus shown in Figures 5A and 5B is a connectionless-type recording and/or reproducing apparatus appropriate to the connectionless-type trading card 300 shown in Figure 3.

Referring to Figure 5A, the recording and/or reproducing apparatus 200 has a display unit 78, a speaker 74, a volume controller 75, a key controller 84, an earphone connection jack 76, on its front side. The key controller 84 has an ON/OFF button 84A for on/off of the recording and/or reproducing apparatus 200, a reproduction button 84B for reproducing subject-related information, a high speed forward reproduction button 84C, a rewind button 84D, and a slow reproduction button 84E. The key controller 84 can further have a recording button (not shown) for recording data in the trading card 100.

The display unit 78 displays images, such as moving pictures and still pictures, and text information such as personal information and statistical information. The speaker 74 and the earphone connection jack 76 output sound information.

Referring to Figure 5B, a transmission and reception unit 60 is installed in the back side of the recording and/or reproducing apparatus 200. The transmission and reception unit 60 is for data communications with the connectionless-type trading card 300 shown in Figure 3.

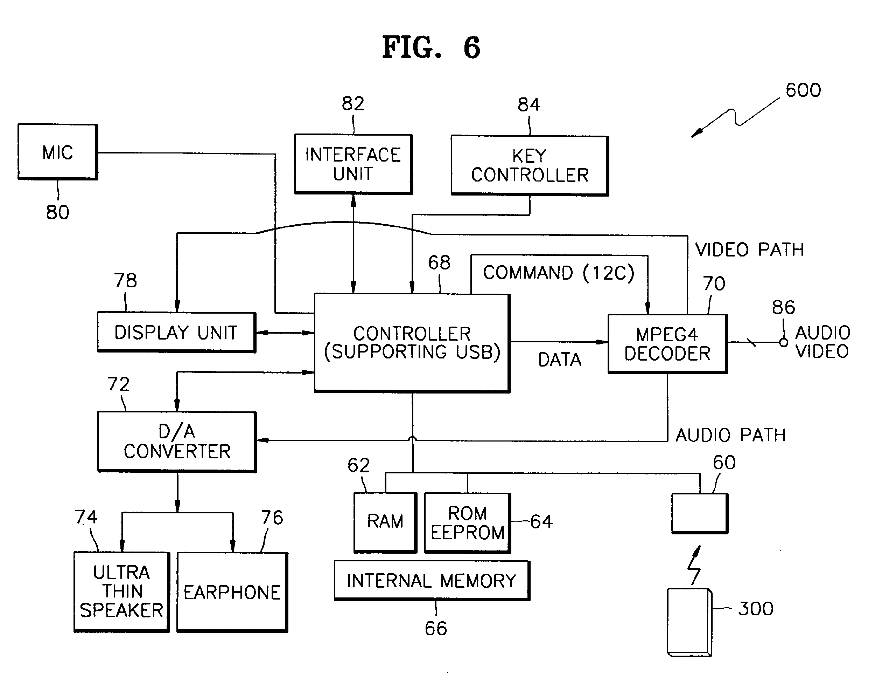

Figure 6 is a block diagram for showing the structure of an embodiment of the recording and/or reproducing apparatus according to the present invention. The recording and/or reproducing apparatus of Figure 6 has a transmission and reception unit 60, a random access memory (RAM) 62, a read-only memory (ROM) 64, an internal memory 66, a controller 68, a decoder 70, a digital-to-analog (D/A) converter 72, a speaker 74, an earphone connection jack 76, a display unit 78, a microphone 80, an interface unit 82, a key controller 84, and an output terminal 86.

The transmission and reception unit 60 receives subject-related data through an optical or radio signal. The transmission and reception unit 60 communicates with the trading card 300 shown in Figure 3.

The subject-related data transmitted from the trading card 300 is received through the transmission and reception unit 60 and stored in the RAM 62. The ROM 64 stores programs and data for controlling the operations of the reproducing apparatus 600.

The key controller 84 receives commands for reading subject-related data from the trading card 300, reproducing the read subject-related data, or for recording the subject-related data in the trading card 300.

The decoder 70 is to decode subject-related data read from the trading card 300, that is, moving picture information, compressed still image information, and compressed sound information. Since image information has much amount of data, it is preferable that the image information is compressed and then stored. The examples of the moving picture compression method includes MPEG, MPEG-2, MPEG-4 and MPEG 7, and the examples of the still picture compression method inclues JPEG, BMP, etc. The decoder 70 decodes compressed moving picture information, compressed still picture information, and compressed sound information.

The controller 68 operates according to a command applied from the key controller 84. If a command is for reproducing, the controller 68 requests the trading card 300 to transmit the subject-related data through the transmission and reception unit 60. In response to the request of information transmission from the reproducing apparatus 600, the semiconductor IC 30 of the trading card 300 transmits the subject-related data stored in the semiconductor IC 30 to the reproducing apparatus 600. The subject-related data transmitted to the recording and/or reproducing apparatus 600 is stored in the RAM 62.

The subject-related data stored in the RAM 62 is transmitted to the decoder 70. The image signal reproduced by the decoder 70 is transmitted to the display unit 78.

The voice signal reproduced by the decoder 70 is output through the speaker 74 or the earphone connection jack 76. In addition, the controller 68 controls high speed forward, rewind, and reproduction of text information.

If a command is for recording, the controller 68 requests the trading card 300 to record subject-related data through the transmission and reception unit 60, and, if the recording request is accepted, subject-related data stored in the RAM 62 is transferred to the trading card 300 through the transmission and reception unit 60. The semiconductor IC 30 of the trading card 300 receives the recording request from the reproducing apparatus 600 and records the subject-related data transmitted from the recording and/or reproducing apparatus 600 in the semiconductor memory.

The interface unit 82 is for communications with an external computer. The reproducing apparatus 600 downloads subject-related data from the external computer through the interface unit 88 and stores the data in the ROM 62, or uploads subject-related data stored in the RAM 62 to the external computer. The interface unit 82 can be a universal serial bus (USB), a parallel port, or infrared light port, etc.

The microphone 80 is for inputting user's sound, and the output terminal 86 is for outputting image and voice signals reproduced by the decoder 70.

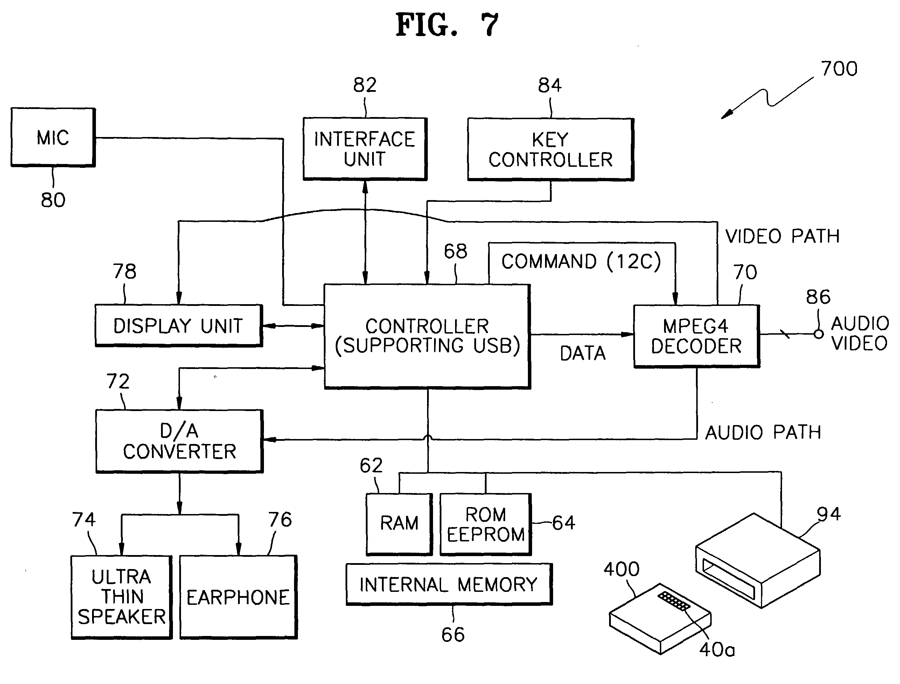

Figure 7 is a block diagram for showing the structure of another embodiment of the recording and/or reproducing apparatus according to the present invention. The recording and/or reproducing apparatus of Figure 7 has a connection unit 94 which acts as a transmission and reception means.

The connection unit 94 has a connection terminal (not shown) corresponding the connection terminal 40A shown in Figure 4. The trading card 400 of Figure 4 is inserted into the connection unit 94.

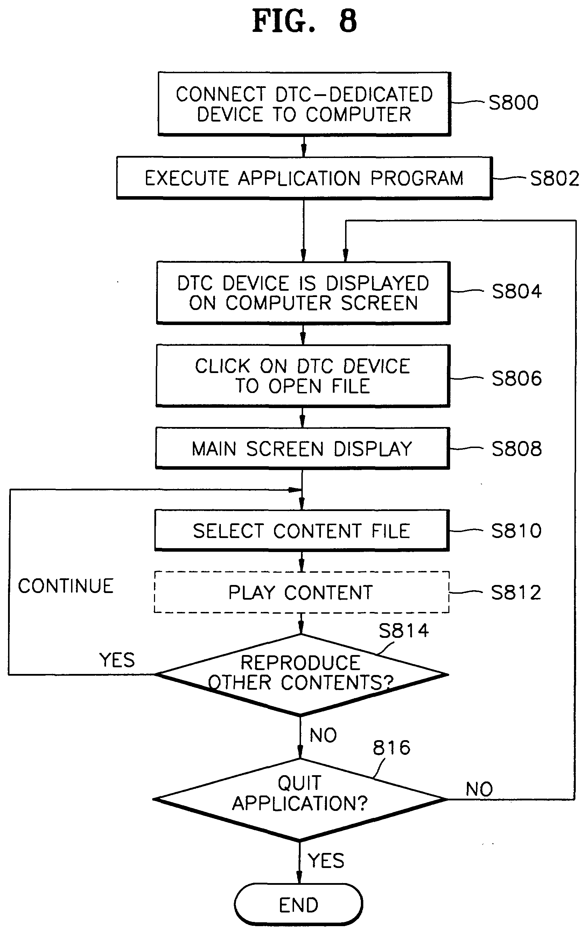

Figure 8 is a flowchart showing the process in which the recording and/or reproducing apparatuses shown in Figures 6 and 7 operate being connected to a computer.

First, the recording and/or reproducing apparatus 600 or 700 of Figure 6 or Figure 7 is connected to a computer in step S800. Through the interface unit 82, for example, an RS232C cable, a parallel cable, or a USB cable, the computer is connected. The connection means is determined by a protocol supported by the interface unit 82.

An application program for the recording and/or reproducing apparatus 600 or 700 is executed in the computer in step S802.

As a result of the execution of the application program, icons indicating the recording and/or reproducing apparatus 600 or 700 are displayed on the monitor of the computer in step S804. A plurality of recording and/or reproducing apparatus can be connected to the computer, and by clicking on one of the displayed icons, a desired recording and/or reproducing apparatus can be selected.

By clicking on one of the icons, a desired recording and/or reproducing apparatus is selected in step S806.

A main screen for interfacing the selected recording and/or reproducing apparatus is displayed in step S808. On the main screen, contents stored in the trading card inserted into the selected recording and/or reproducing apparatus are displayed. Contents can be moving pictures, still pictures, text information, or sound information.

One among the contents is selected in step S810.

The selected content is reproduced in step S812.

An icon determining whether or not other contents are reproduced is selected and according to the selection, the step S808 is repeated in step S814.

An icon determining whether or not the application program continues to be executed is determined, and according to the selection, the step S804 is repeated or the execution of the application program is stopped in step S816.

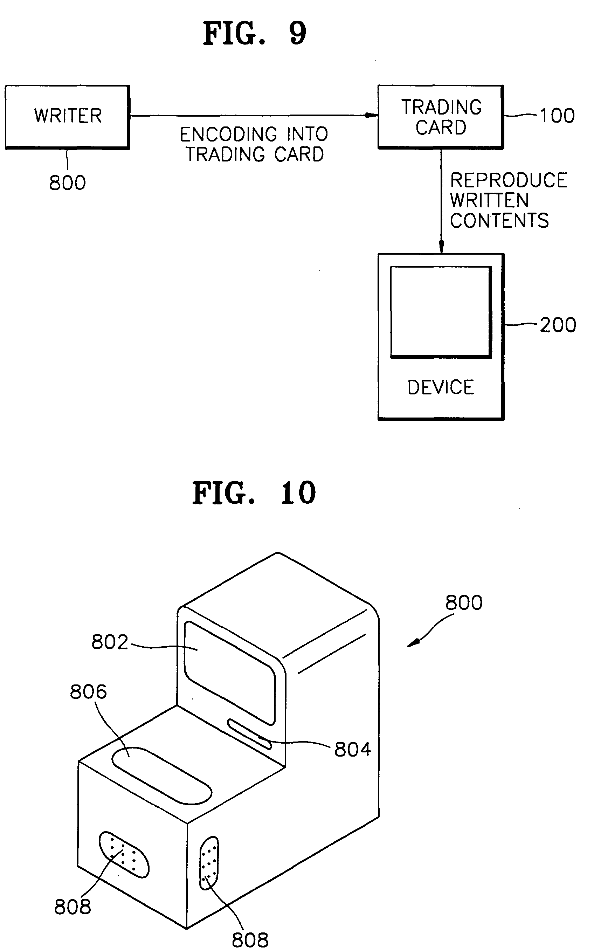

Figure 9 illustrates the process in which subject-related data is recorded in a trading card 100. Subject-related data is recorded in the trading card 100 by the recording apparatus 800.

The subject-related data recorded in the trading card 100 is reproduced and displayed by one of the recording and/or reproducing apparatuses 600 or 700 of Figure 6 or Figure 7.

Figure 10 illustrates the external appearance of the recording apparatus 800 shown in Figure 9. A writer 800 has a monitor 802, a slot 804, a keyboard 806, and a speaker 808. The trading card 100 is inserted into the slot 804. A person who writes information controls information recording into the trading card 100 through the keyboard 806 and the monitor 802.

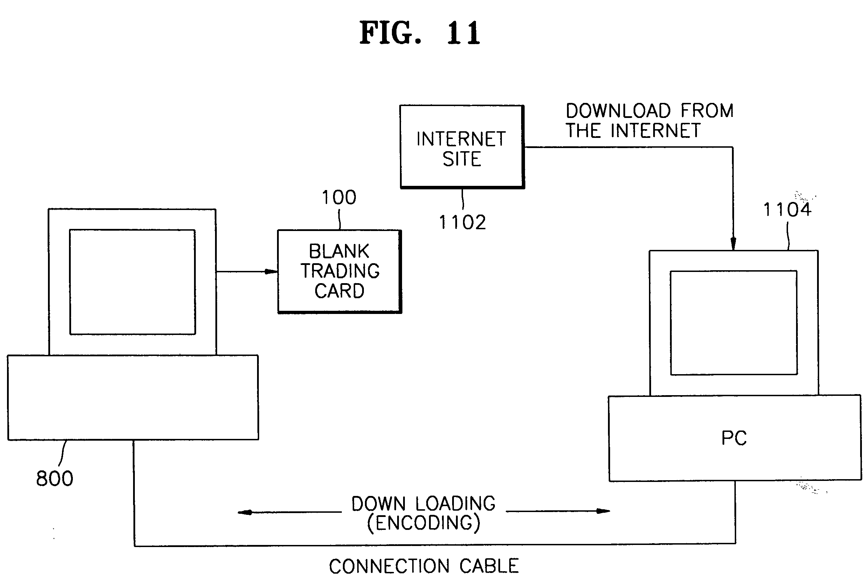

Figure 11 illustrates the process in which subject-related data is recorded in a trading card 100. Subject-related data is downloaded from a web site 1102 to a personal computer 1104. The subject-related data downloaded in the personal computer 1104 is provided to the writer 800 shown in Figures 9 or 10. The writer 800 records information in the trading card 100.

Subject-related data recorded in the trading card 100 includes moving picture information, still picture information, sound information, and text information.
Sound can be moving picture-accompanying sound, or the sound of the subject. Or the sound of a user having the trading card 100 can be recorded.

Text information is information related to a hero. For example, if the hero of the trading card is a sports star, statistical information, personal information, etc. of the sports start are recorded.

Moving picture information stored in the trading card 100 can have a sequence. That is, the trading card has a serial number as an identification means, and moving pictures stored in trading cards having neighboring serial numbers have a sequence. In this case, the collection value of the trading card can be enhanced.

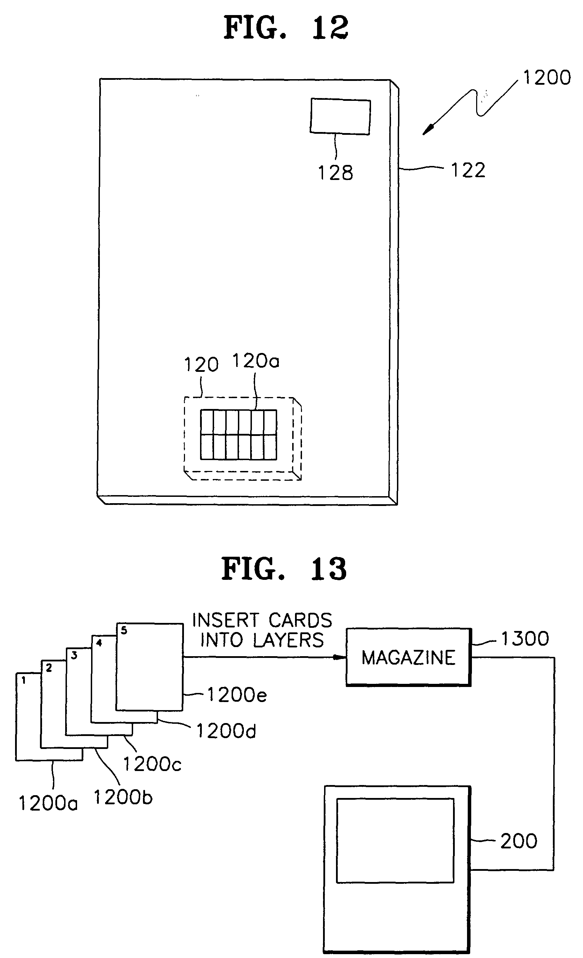

Figure 12 illustrates another embodiment of the trading card according to the present invention. Each of the trading cards 1200 shown in Figure 13 further has an identification means 128.

A housing 122 supports an IC 120, a pin 120A, and an identification means 128, and the identification means is formed by printing or etching.

The identification means 128 is formed by a serial number, and trading cards having neighboring serial numbers store moving pictures of a sequence.

Figure 13 illustrates the process in which the trading cards shown in Figure 12 are reproduced. Referring to Figure 13, a magazine 1300 can load a plurality of trading cards. In reproducing moving pictures, the recording and/or reproducing apparatus 200 sequentially reproduces moving pictures stored in the trading cards 1200A through 1200E loaded in the magazine 1300.

The effect of using the magazine 1300 is removing the burden of exchanging trading cards one by one when trading cards are reproduced continuously.

The magazine 1300 reproduces subject-related data from the loaded trading cards 1200A through 1200E, and transmits the reproduced data sequentially to the recording and/or reproducing apparatus 200.

The reproduced signal by the recording and/or reproducing apparatus according to the present invention can be provided to a TV, computer, video recorder, camcorder, and other display units.

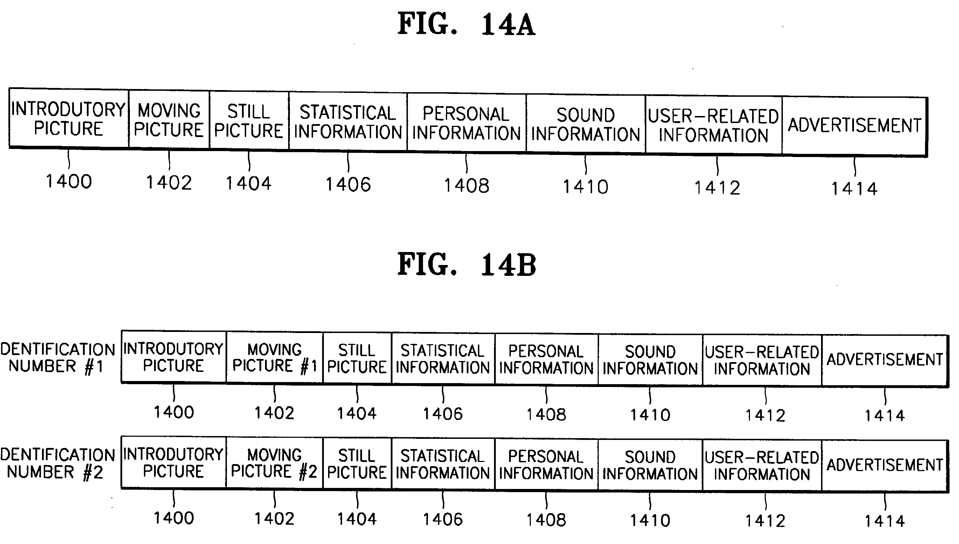

Figures 14A and 14B illustrate an example of data recorded in a trading card 100.

Referring to Figure 14A, the trading card 100 has an introductory picture 100, the card hero's moving pictures 1402, still pictures 1404, statistical information 1406, personal information 1408, sound information 1410, user-related information 1412, and sponsor's advertisement 1414.

Here, the card hero's statistical information 1406 and personal information 1408 are text information. The card hero's sound information is obtained by sampling the voice of the card hero, and can separately include voice synthesizing parameters for an interactive conversation between the user and the card hero.

Figure 14B shows data format recorded in the trading cards having continuing identification numbers. If the first trading card has an identification number #1, and the second trading has an identification number #2, the first trading card has the first moving picture 1402 (moving picture #1) and the second trading card has the second moving picture 1402 (moving picture #2), as shown in Figure 10B. The moving pictures #1 and #2 are in time sequence.

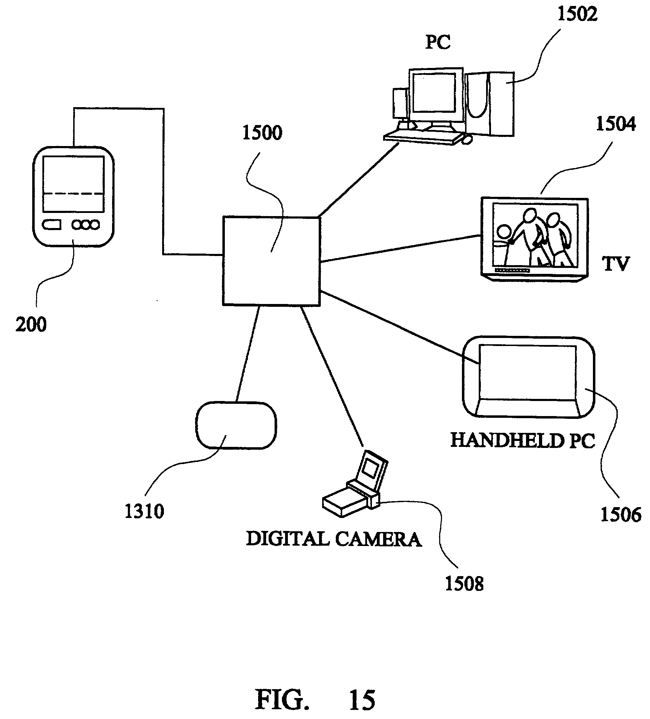

Figure 15 illustrates the relation between a recording and/or reproducing apparatus 200 and other devices. A video and/or audio signal output from the output terminal of the recording and/or reproducing apparatus 200 is provided to a computer 1502, a TV 1504, a hand-held computer 1506, a digital camera 1508, and other display apparatuses through an adaptor 1500. By using the recording and/or reproducing apparatus 200 and the adaptor 1500, it is enabled to magnify hero's moving pictures and still pictures, or to store the pictures in a storage medium.

The recording and/or reproducing apparatus 200 according to the present invention enables a conversation between the user and the hero, using subject-related data, user's sound, and user-related information.

For example, if a user inputs his name, for example, John Young, it can be implemented that the hero greets the user, saying "Hi, John. This is Michael."

This mutual conversation can be implemented by a text, or by a voice synthesizing. Parameters required for voice synthesizing are extracted from the hero's sound information recorded in the trading card.

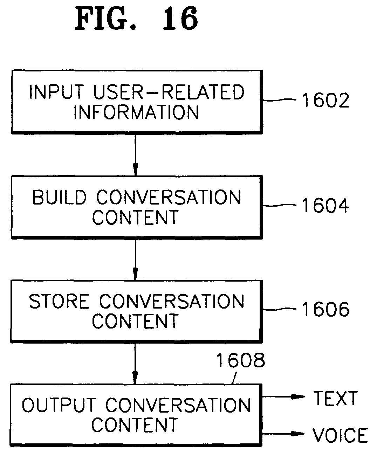

Figure 16 is a flowchart showing a communication realizing method according to the present invention.

First, user-related information is input in step S1602. The user-related information can be a name, the date of user's birth, etc. User-related information is recorded in a writer installed in a shop for trading cards 100.

The contents of a conversation is built using the user-related information in step S1604.

For example, if the user's name is John Young, greeting sentences from the hero to the user, saying "Hi, John. This is Michael." are built.

The sentences are built in the following steps. First, a sentence having an empty space for the user name is prepared. Then, the user inputs his name, and the input name is written in the empty space. By doing so, a greeting from the hero to the user is prepared.

The built conversation contents are recorded in the trading card 100 in step S1606.

The reproducing apparatus 200 checks whether or not built conversation contents exist in reproducing the trading card 100, and if the contents exist, output the contents in step S1608.

The built conversation contents are output on a text screen or as a voice. When the contents are output as a voice, parameters required for synthesizing a voice are extracted from the hero's voice signal stored in the trading card 100, and applied to the built conversation contents to synthesize a voice.

Though the embodiment of the present invention is described with a sport star as the hero of the trading card, the hero of the trading card can be a musician, friends, pets, and other things. For example, the contents of the trading card according to the present invention can be extended to include heros of cartoons or interesting matters.

As described above, the trading card according to the present invention has a semiconductor IC for storing moving pictures and enables to provide more subject-related data than the existing trading cards.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A trading card (100, 300) wherein information on the subject of the trading card is printed on the sides of the trading card, data can be stored, and a recording and/or reproducing apparatus (200) can record data and/or read data in the trading card, the trading card comprising:
a data storage means (10, 30) for storing subject-related data, wherein the reproducing apparatus read the subject-related data from the data storage means (10, 30) or record the subject-related data to the data storage means (10, 30) through communications between the data storage means (10, 30) and the recording and/or reproducing apparatus (200), and the subject-related data includes picture information characterizing or related to the subject; and
a housing means (32) for containing and protecting the data storage means.

2. The trading card of claim 1, wherein the data storage means is a connectionless-type semiconductor integrated circuit (IC) (30) having a transmission and reception unit for interfacing the recording and/or reproducing apparatus for the subject-related data and operational power.

3. The trading card of claim 1, wherein the data storage means is a connection-type semiconductor IC having a connection terminal for interfacing the recording and/or reproducing apparatus for the subject-related data and operational power.

4. The trading card of claim 1, 2 or 3, wherein the data storage means (30) comprising:
a semiconductor memory for storing the subject-related data; and
an output controller for controlling reading the subject-related data from the semiconductor memory.

5. The trading card of claim 1, 2, 3 or 4, wherein the data storage means comprising:
an input controller for recording the subject-related data in the semiconductor memory.

6. The trading card of any preceding claim, wherein the subject-related data has moving picture and still picture information related to the subject or reminding a user of the subject.

7. The trading card of any preceding claim, wherein the subject-related data further includes sound information related to the subject or reminding a user of the subject.

8. The trading card of any preceding claim, wherein the subject-related data further includes text information related to the subject, such as statistical information and personal information.

9. The trading card of any preceding claim, wherein a coating film (34A, 34B) containing the housing means is further included.

10. The trading card of any preceding claim, wherein an identification means for identifying the trading card is further included, and the housing means supports the identification means.

11. The trading card of claim 10, wherein the identification means comprises a serial number, and trading cards having continuing serial numbers have continuing moving picture information.

12. A recording and/or reproducing apparatus capable of storing data related to a subject (subject-related data), wherein subject-related data includes picture information at least characterizing the subject or reminding a user of the subject, and the recording and/or reproducing apparatus reads the subject-related data from or records the subject-related data in a trading card, the recording and/or reproducing apparatus comprising:
a transmission and reception means (60) for transmitting data to and receiving data from the trading card (100, 300);
a memory (62) for storing the subject-related data provided through the transmission and reception means (60);
a key controller (84) for inputting user's manipulation commands;
a decoder (70) for decoding the picture information from the subject-related data stored in the memory (62) and then generating a video signal corresponding to the picture information;
a display unit (78) for displaying the video signal generated by the decoder (70); and
a controller (68) for controlling the transmission and reception unit (60), the decoder (70), and the display unit (78) according to the manipulation commands.

13. The recording and/or reproducing apparatus of claim 12, wherein the transmission and reception means comprises a connection unit (94).

14. The recording and/or reproducing apparatus of claim 12 or 13, wherein the transmission and reception means transmits an optical or radio signal to and receives an optical or radio signal from the trading card.

15. The recording and/or reproducing apparatus of claim 12, 13 or 14, further comprising:
an output terminal for outputting video and voice signals reproduced by the decoder.

16. The recording and/or reproducing apparatus of claim 12, 13, 14 or 15, further comprising:
a speaker for outputting a voice signal output through the controller.

17. The recording and/or reproducing apparatus of claim 12, 13, 14, 15 or 16, further comprising:
an earphone connection jack for outputting the voice signal output through the controller, to an earphone for outputting.

18. The recording and/or reproducing apparatus of any of claims 12 to 17, further comprising:
an interface unit for outputting the subject-related data stored in the memory to an external device, or receiving the subject-related data provided from the external device.

19. The recording and/or reproducing apparatus of any of claims 12 to 18, wherein the controller transmits the subject-related data stored in the memory to the trading card, in response to a recording command applied from the key controller.

20. A method for realizing communications between the hero of a trading card and a user, using the trading card capable of storing data related to a subject (subject-related data), wherein the subject-related data has moving picture information characterizing the subject or reminding the user of the subject, the method comprising the steps of:
(a) receiving user-related information from the user of the trading card;
(b) building the content of a conversation between the hero of the trading card and the user using user-related information;
(c) storing the contents of the conversation in the trading card; and
(d) outputting the built conversation when the subject-related information in the trading card is reproduced.

21. The method of claim 20, wherein in the step (d), the contents of the build conversation is displayed in the form of text information.

22. The method of claim 20 or 21, wherein the step (d) further comprising the sub-steps of:
(d1) reading a sound signal indicating the voice of the hero from the subject-related data;
(d2) extracting parameters for synthesizing a voice, from the hero's sound signal;
(d3) synthesizing a voice for the built conversation, using the parameters extracted in the step (d2); and
(d4) outputting the voice synthesized signal through a speaker.
